Europäisches Patentamt

European Patent Office

Office européen des brevets

(11) Publication number: **0 090 049**
**B1**

(19)

## (12) EUROPEAN PATENT SPECIFICATION

(45) Date of publication of patent specification: **09.11.88**

(51) Int. Cl.⁴: **B 23 H 1/02**

(21) Application number: **82902549.3**

(22) Date of filing: **27.08.82**

(86) International application number:
**PCT/JP82/00344**

(87) International publication number:
**WO 83/00649 03.03.83 Gazette 83/06**

(54) **METHOD OF CONTROLLING BACKSTEP IN ELECTRIC DISCHARGE MACHINING APPARATUS.**

(30) Priority: **27.08.81 JP 134775/81**

(43) Date of publication of application:
**05.10.83 Bulletin 83/40**

(45) Publication of the grant of the patent:
**09.11.88 Bulletin 88/45**

(84) Designated Contracting States:
**CH DE FR GB LI**

(56) References cited:
**JP-A-52 020 497**
**JP-A-55 164 439**

(73) Proprietor: **FANUC LTD**
**3580, Shibokusa Aza-Komanba Oshino-mura**
**Minamitsuru-gun Yamanashi 401-05 (JP)**

(72) Inventor: **MATSUI, Mitsuo**
**1-12-17, Higashinakano Nakano-ku**
**Tokyo 164 (JP)**
Inventor: **KINOSHITA, Mitsuo**
**Nanyodai 69-18 1755-328, Horinouchi Hachioji-shi**
**Tokyo 192-03 (JP)**
Inventor: **MATSUMURA, Teruyuki**
**38-8, Matsugaya Hachioji-shi**
**Tokyo 192-03 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a retraction control method in an electric discharge machine. More particularly, the invention relates to an electric discharge machine control method suited for application to an electric discharge machine in which an electrode of a prescribed shape, held close to the surface of a workpiece, is moved into the workpiece to perform cutting and an electric discharge is produced across the electrode and the workpiece, thereby to subject the workpiece to electric discharge machining.

Electric discharge machines include a wire-cut electric discharge machine wherein a wire electrode is moved relative to a workpiece along a commanded path, thereby to perform electric discharge machining, and an electric discharge machine wherein an electrode of a prescribed shape, held close to the surface of a workpiece, is moved into the workpiece to perform cutting and an electric discharge is produced across the electrode and the workpiece, thereby to machine the workpiece into the same shape as the electrode.

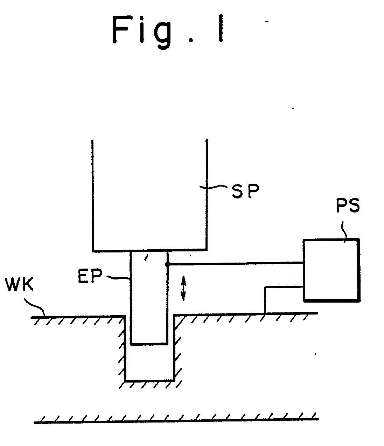

Fig. 1 is a schematic explanatory view of the latter type of electric discharge machine. An electrode EP serving as a punch is supported by a spindle SP, and fed for machining in the direction of the arrow by a servomotor, not shown. A voltage is applied by a power source PS across the electrode EP and a workpiece WK (which is to be machined into a die). Accordingly, when the electrode EP is advanced for machining while a minute gap is maintained between the workpiece WK and the electrode EP, the workpiece WK is machined into a shape similar to that of the electrode EP. An enlarged bore of desired size can be readily machined in the workpiece WK by controlling, e.g., the machining pulses and energy. If necessary, the machining operation is carried out while the electrode EP is being moved in eccentric fashion, whereby an enlarged bore of desired dimensions can be machined.

In the electric discharge machine of the above type, it is necessary to retract the electrode, thereby improving the interpole conditions, immediately upon the generation of a short-circuit signal which is produced when the electrode EP contacts the workpiece WK, followed by resuming machining.

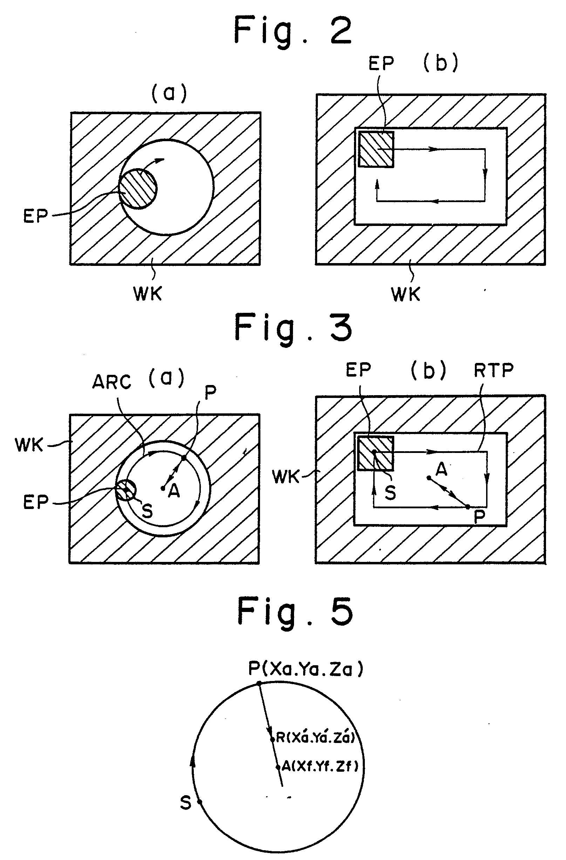

A common method of controlling retraction is to return the electrode, in response to generation of the short-circuit signal, back along the path machined up to that point (i.e., along the already machined path). However, as shown in Figs. 2(a) and 2(b), there are cases where the workpiece WK is subjected to circular or rectangular electric discharge machining by moving a round bar-shaped or rectangular electrode EP along an arcuate or rectangular path, respectively. With the foregoing retraction control method, the electrode is constantly in intimate contact with the workpiece even though the electrode is retracted after generation of the short-circuit signal. This is disadvantageous in that the short-circuited state cannot be brought to an end.

According to the present invention there is provided a retraction control method in an electric discharge machine wherein an electrode is moved relative to a workpiece to subject the workpiece to electric discharge machining, and wherein the electrode is moved, in response to generation of a short-circuit signal indicative of contact between the electrode and the workpiece, in a direction which will break said contact, characterised by defining beforehand a fixed point for use in retracting the electrode, discriminating generation of the short-circuit signal, and retracting the electrode toward said fixed point in response to generation of the short-circuit signal.

An example of the invention may provide a retraction control method by means of which, when a short-circuit signal is generated, the electrode is moved linearly toward a previously designated fixed point irrespective of the already machined path, thereby to promptly end the short-circuited state, shorten machining time and resume machining in stable fashion.

In a development of the invention, when appropriate the electrode can be retracted along an already machined path or toward the previously designated fixed point, whereby the electrode can be retracted in the manner best suited to the machining conditions and machining method by switching between the foregoing alternatives.

For a better understanding of the invention and to show how it may be put into effect reference will now be made, by way of example, to the accompanying drawings in which:

Fig. 1 is a schematic explanatory view of an electric discharge machine; Fig. 2 is an explanatory view for describing the disadvantage encountered in the prior-art method; Fig. 3 is an explanatory view of a retraction control method according to the present invention; Fig. 4 is a block diagram for realizing the present invention; and Fig. 5 is an explanatory view for describing circuit operation according to the present invention.

Fig. 3 is an explanatory view for describing the general features of retraction control according to the present invention.

In circular and rectangular machining as shown in Figs. 3(a) and (b), point A shall represent a predetermined retraction end point (fixed point), point S a machining starting point, and point P a short-circuit signal generation point. The electrode is moved from point S along an arcuate path ARC or rectangular path RTP to subject the workpiece WK to electric discharge machining. When the short-circuit signal is generated at point P in the course of machining, the electrode EP is thenceforth moved for retraction toward the fixed point A along a straight line until the short circuit ends. When the short circuit is terminated by retraction control, the short-circuit signal SS assumes a low level, or a forward movement signal rises to a high level, thereby halting retraction of the electrode EP and thenceforth moving the electrode back toward the short-circuit position P. After reaching the point P, the electrode is again moved along the commanded arcuate path ARC or rectangular path RTP to perform electric discharge machining as commanded. It should be noted that while the coordinates of the fixed point represent the present position at the instant a G-function instruction (G73) is issued, coordinate values along the X, Y and Z axes can be entered in advance following G73, which coordinate values can then be taken as the coordinates of the fixed point. With an electric discharge machine, furthermore, it is necessary at times that retraction control be performed by traversing the already machined path in the opposite direction. When such is the case, a G-function instruction (G72) is issued, whereby subsequent generation of the short-circuit signal SS will cause retraction control to be effected along the already machined path. Thus, ordinary retraction control is performed in response to G72, whereas retraction control to the fixed point is executed in response to G73. G72 and G73 shall be treated as modals. That is, we shall assume that when one of them is commanded, retraction control is performed based thereon until the other is commanded.

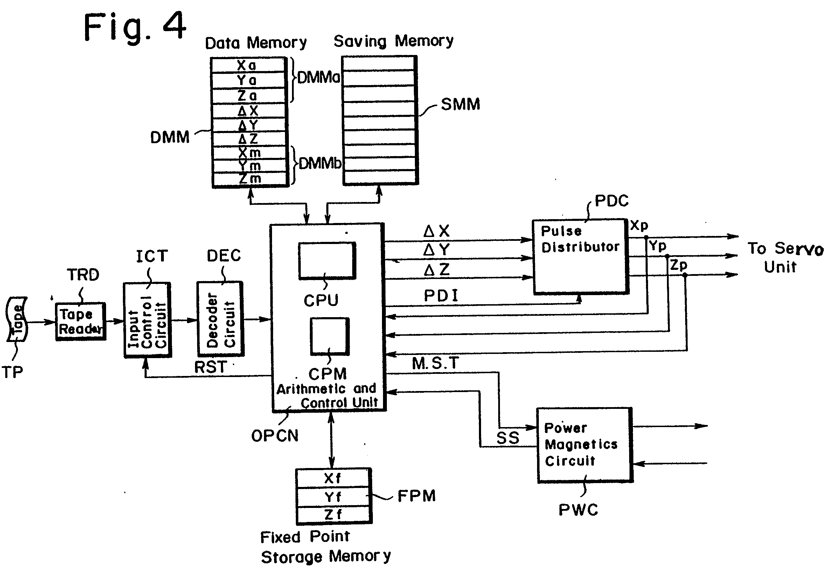

Fig. 4 is a block diagram for realizing the retraction control method according to the present invention. Fig. 5 is a diagram for explaining the same.

In Fig. 4, TP represents an NC tape having a punched NC program comprising a multiplicity of numerial control data (NC data). TRD is a tape reader, and ICT an input control circuit which controls the tape reader TRD for successively reading the NC data from the NC tape and applying the data to a decoder circuit constituting the next stage. DEC denotes the decoder circuit for decoding the read NC data, for applying, e.g., a position command (Xe, Ye, Ze) and G-function command to an arithmetic and control unit when such is the read NC data, and for applying M-, S- and T-function commands to the machine side through a power magnetics circuit when such is the read NC data. OPCN represents the arithmetic and control unit, which has a processor CPU, a control program memory CPM, etc. For example, if an absolute position command Xe, Ye, Ze enters in a linear interpolation mode, the arithmetic and control unit OPCN performs the operations:

$$Xe—Xa→\Delta X, Ye—Ya→\Delta Y, Ze—Za→\Delta Z \quad (1)$$

(where Xa, Yz, Za indicate the present position along each axis), thereby obtaining incremental values $\Delta X, \Delta Y, \Delta Z$, and delivers these incremental values to a pulse distributor, which is the next stage. Each time the pulse distributor generates distributed pulses Xp, Yp, Zp, the arithmetic and control unit OPCN performs the operations given by the following equations:

$$Xm−1→Xm, Ym−1→Ym, Zm−1→Zm \quad (2)$$

$$Xa\pm1→Xa, Ya\pm1→Ya, Za\pm1→Za \quad (3)$$

to update remaining amounts of movement Xm, Ym, Zm along each axis as well as the present position Xa, Ya, Za along each axis. In the operations shown at (3), the signs depend upon the direction of movement, with plus signs prevailing for movement in the positive direction and minus signs for movement in the negative direction. The arithmetic and control unit OPCN is also adapted to execute processing in accordance with a G-function instruction upon input of such an instruction. Specifically, when a G-function instruction G01 indicative of linear interpolation enters, the arithmetic and control unit OPCN executes processing given by the expressions (1), (2) and (3) until a circular interpolation instruction input G02 or G03 arrives. When G02 (clockwise circular interpolation instruction) or G03 (counter-clockwise circular interpolation instruction) is commanded, circular interpolation processing is executed from that point onward. The foregoing process steps are controlled under the supervision of a control program and the actual processing is executed by the processor CPU. The arithmetic and control unit OPCN also executes retraction control processing. Specifically, when the electrode contacts the workpiece, the short-circuit signal SS is generated, whereupon retraction control processing, described below, is performed under the control of a prescribed control program. PDC represents a known pulse distributor for three axes simultaneously, and DMM indicates a data memory for storing, e.g., the present positions Xa, Ya, Za and incremental values $\Delta X, \Delta Y, \Delta Z$ along respective axes, and the remaining amounts of movement Xm, Ym, Zm along respective axes. SMM represents a saving memory for temporarily saving the contents of the data memory DMM in response to control by the arithmetic and control unit OPCN when the short-circuit signal SS is generated, and for returning the stored contents to the data memory DMM at the end of retraction control. FPM designates a fixed point storage memory for storing present positions Xa, Ya, Za along respective axes as coordinates Xf, Yf, Zf of a fixed point along respective axes when G73 is commanded, whereby the electrode is retracted toward the fixed point linearly during retraction control. As mentioned above, the coordinates of the fixed point may be commanded following G73 to store them in the fixed point memory FPM. PWC represents a power magnetics circuit for supervising an exchange of data between the machine and the NC device, the short-circuit signal SS being fed into the NC device from the machine side through this circuit.

The operation of Fig. 4 will be described next.

Under ordinary conditions, the input control circuit ICT controls the tape reader TRD to read NC data from the NC tape in block-by-block fashion, and applies the NC data to the arithmetic and control unit OPCN, the latter executing numerical control processing to subject a workpiece to desired electric discharge machining. Specifically, when a command read from the NC tape is an absolute positional command (Xe, Ye, Ze), the decoder circuit DEC applies the positional command to the arithmetic and control unit OPCN. When the positional command (Xe, Ye, Ze) arrives (we will assume that the linear interpolation mode prevails in response to G01), the arithmetic and control unit performs the operations given by expression (1) to find the incremental values $\Delta X$, $\Delta Y$, $\Delta Z$, applies these to the pulse distributor PDC, stores them in the data memory DMM, and sets $\Delta Z$, $\Delta Y$, $\Delta Z$ in remaining amount of movement storage areas as remaining amounts of movement Xm, Ym, Zm (Xm=$\Delta X$, Ym=$\Delta Y$, Zm=$\Delta Z$).

The pulse distributor PDC executes a pulse distribution operation immediately upon being provided with the incremental values $\Delta X$, $\Delta Y$, $\Delta Z$. When distributed pulses Xp, Yp, Zp are produced in response to the pulse distribution operation, they are applied to a servo unit, not shown, to drive DC motors for respective axes, whereby the electrode is transported along the programmed path. At the same time, the distributed pulses Xp, Yp, Zp are applied to the arithmetic and control unit OPCN. The latter executes the arithmetic operations of expressions (2) and (3) and updates the contents of the storage area DMMa storing the present positions Xa, Ya, Za along respective axes and the contents of the storage area DMMb storing the remaining amount of movement Xm, Ym, Zm along the respective axes. When the conditions Xm=0, Ym=0, Zm=0 is attained, the unit OPCN delivers a pulse distribution inhibit signal PDI to the pulse distributor PDC and generates a read signal RST for the next block of NC data, whereby the input control circuit ICT reads said next block of NC data.

When the machining data read from the NC tape TP is an M-, S- or T-function instruction, the arithmetic and control circuit OPCN delivers the instruction to the machine side through the power magnetics circuit PWC. Then, when a signal from the machine side rises to a high level, indicating completion of the machine operation based on the M-, S- or T-function instruction, the arithmetic and control circuit OPCN generates the NC data read signal RST to effect the read out of the next item of machining data.

When a G-function instruction is read from the NC tape TP, the input control circuit ICT applies the instruction to the arithmetic and control unit OPCN, the latter responding by executing processing in accordance with the G function. When the G-function instruction G73, for moving the electrode toward a fixed point along a straight line, is commanded in a retraction control operation, the arithmetic and control unit OPCN stores the G-function instruction (G73) in a storage area (not shown), i.e., sets a predetermined storage area to logical "1", and stores the present position (Xa, Ya, Za), in terms of each axis, in the fixed point storage memory FPM as coordinates (Xf, Yf, Zf) of the fixed point A (Fig. 5).

As the electrode is performing machining by being moved along the commanded path based on a path command following the issuance of G73, the short-circuit signal SS is applied to the arithmetic and control unit OPCN through the power magnetics circuit PWC when the electrode contacts the workpiece at the point P in Fig. 5. When the short-circuit signal SS goes high, the arithmetic and control unit OPCN immediately delivers the pulse distribution inhibit signal PDI to the pulse distributor PDC, and saves the contents of the data memory DMM, namely the present position (Xa, Ya, Za), incremental values ($\Delta X$, $\Delta Y$, $\Delta Z$) and the remaining amounts of movement (Xm, Ym, Zm), etc., in the saving memory SMM, so that the contents of the data memory will not be erased. Next, the unit OPCN obtains the fixed poing A and the incremental values $\Delta X'$, $\Delta Y'$, $\Delta Z'$ up to the present position (short-circuit position) · P by performing the following operations:

$$Xf-Xa \rightarrow \Delta X', \quad Yf-Ya \rightarrow \Delta Y', \quad Zf-Za \rightarrow \Delta Z'$$

and applies the incremental values $\Delta X'$, $\Delta Y'$, $\Delta Z'$ to the pulse distributor PDC, thereby starting the pulse distribution operation. Accordingly, the electrode is moved (retracted) toward the fixed point A along a straight line and continues to be retracted until the short circuit ends or until a forward movement signal is generated. When the short circuit ends (when the short-circuit signal SS vanishes) at point R (Fig. 5), the pulse distribution inhibit signal PDI is generated to halt the pulse distribution operation. At this time, the present position in the data memory DMM is Xa', Ya', Za', which is equivalent to the coordinates of the point R.

Next, the arithmetic and control unit OPCN performs the operations:

$$Xa-Xa' \rightarrow \Delta X'', \quad Ya-Ya' \rightarrow \Delta Y'', \quad Za-Za' \rightarrow \Delta Z''$$

to obtain incremental values $\Delta X''$, $\Delta Y''$, $\Delta Z''$ up to the contact point (point P), applies these values to the pulse distributor circuit PDC, and stores the incremental value $\Delta X''$, $\Delta Y''$, $\Delta Z''$ as remaining amounts of movement Xm(=$\Delta X''$), Ym(=$\Delta Y''$), Zm(=$\Delta Z''$). The pulse distributor PDC performs a pulse distribution operation based on the incremental values $\Delta X''$, $\Delta Y''$, $\Delta Z''$ and applies the distributed pulses Xp, Yp, Zp to a servo unit (not shown) to drive DC motors for respective axes, whereby the electrode is moved toward the short-circuit point P. At the same time, the distributed pulses Xp, Yp, Zp enter the arithmetic and control unit OPCN. The latter performs the operations given by expressions (2), (3) each time the distributed pulses Xp, Yp, Zp are received, thereby updating the present position and the remaining amounts of movement. When the condition Xm=0, Ym=0, Zm=0 is attained, that is, when the electrode arrives at the short-circuit point P, the pulse distribution inhibit signal PDI is generated to halt the pulse distribution operation. Then, finally, the present position (Xa, Ya, Za), incremental values ($\Delta$X, $\Delta$Y, $\Delta$Z) and remaining amounts of movement Xm, Ym, Zm, which have been saved in the saving memory SMM, are returned to the data memory DMM, and the incremental values ($\Delta$X, $\Delta$Y, $\Delta$Z) are applied to the pulse distributor PDC, whereupon the electrode is again moved along the commanded path to resume electric discharge machining.

In a case where G72 is commanded, retraction control is performed in the known manner, with the electrode being retracted along the previously machined path, when the short-circuit signal SS is generated. In other words, the control program includes a processing program for retraction toward the fixed point, and a processing program for retraction along the previously machined path. Switching between the programs is controlled in accordance with whether G72 or G73 is commanded.

When a short-circuit signal is generated, the electrode is moved linearly toward a previously designated fixed point irrespective of the already machined path, thereby to promptly end the short-circuited state, shorten machining time and resume machining in stable fashion.

It is also possible to switch between retraction along an already machined path and retraction toward a previously designated fixed point, so that the electrode can be retracted in the manner best suited to the machining conditions and machining method.

## Claims

1. A retraction control method in an electric discharge machine wherein an electrode (EP) is moved relative to a workpiece (WK) to subject the workpiece (WK) to electric discharge machining, and wherein the electrode (EP) is moved, in response to generation of a short-circuit signal (SS) indicative of contact between the electrode (EP) and the workpiece (WK), in a direction which will break said contact, characterised by defining beforehand a fixed point (A) for use in retracting the electrode (EP), discriminating generation of the short-circuit signal (SS), and retracting the electrode (EP) toward said fixed point (A) in response to generation of the short-circuit signal (SS).

2. A retraction control method according to claim 1, characterised by the step of storing the coordinates of the fixed point (A), storing a short-circuit position (P) in response to generation of a short-circuit signal (SS), retracting the electrode toward the fixed position (A), halting retraction in response to termination of the short-circuit, and repositioning the electrode (EP) at the short-circuit position (P).

3. A retraction control method according to claim 2, characterised by having a step of monitoring the present position of the electrode (EP) relative to the workpiece (WK), and wherein the present position prevailing when the short-circuit signal (SS) is generated serves as the short-circuit position (P).

4. A retraction control method according to claim 2 or 3, characterised in that, following repositioning of the electrode (EP) at the short-circuit position (P), the electrode is moved relative to the workpiece (WK) along a commanded path to resume electric discharge machining.

5. A retraction control method according to any preceding claim, characterised by having a step of retracting the electrode (EP) upon selectively switching between a retraction mode for retracting the electrode (EP) toward the fixed point (A) in response to the short-circuit signal (SS), and a retraction mode for retracting the electrode (EP) along a previously machined path in response to generation of the short-circuit signal (SS).

6. A retraction control method in an electric discharge machine according to claim 5, characterised in that the retraction modes are switched by a G-function instruction, and in that said G-function instruction is a modal.

## Patentansprüche

1. Verfahren zum Steuern der Rückzugsbewegung bei einer Elektroerosionsmaschine, bei der eine Elektrode (EP) relativ zu einem Werkstück (WK) bewegt wird, um das Werkstück (WK) einer Bearbeitung mittels elektrischer Entladung zu unterziehen, und bei der die Elektrode (EP) in Reaktion auf die Erzeugung eines Kurzschlußsignals (SS), das auf einen Kontakt zwischen der Elektrode (EP) und dem Werkstück (WK) hinweist, in einer Richtung bewegt wird, die den Kontakt unterbricht, gekennzeichnet durch das Vorabdefinieren eines festgelegten Punkts (A) zur Benutzung beim Zurückziehen der Elektrode, das Diskriminieren der Erzeugung des Kurzschlußsignals (SS) und das Zurückziehen der Elektrode (EP) in Richtung auf den festgelegten Punkt (A) in Reaktion auf die Erzeugung des Kurzschlußsignals (SS).

2. Verfahren zum Steuern der Rückzugsbewegung nach Anspruch 1, gekennzeichnet durch einen Schritt zum Speichern der Koordinaten des festgelegten Punkts (A), das Speichern einer Kurzschlußposition (P) in Reaktion auf die Erzeugung eines Kurzschlußsignals (SS), das Zurückziehen der Elektrode in Richtung auf die festgelegte Position (A), das Anhalten der Rückzugsbewegung in Reaktion auf die Beendigung des Kurzschlusses und ein Wiederpositionieren der Elektrode (EP) bei der Kurzschlußposition (P).

3. Verfahren zum Steuern der Rückzugsbewegung nach Anspruch 2, gekennzeichnet durch das Vorsehen eines Schritts zum Überwachen der augenblicklichen Position der Elektrode (EP) relativ zu dem Werkstück, wobei die gerade herrschende augenblickliche Positiion, wenn das Kurzschlußsignal (SS) erzeugt wird, als die Kurzschlußposition (P) dient.

4. Verfahren zum Steuern der Rückzugsbewegung nach Anspruch 2 oder 3, dadurch gekennzeichnet, daß die elektrode (EP) im Anschluß an deren Wiederpositionierung bei der Kurzschlußposition (P) relativ zu dem Werkstück (WK) längs eines befohlenen Weges bewegt wird, um die Bearbeitung mittels elektrischer Entladung fortzusetzen.

5. Verfahren zum Steuern der Rückzugsbewegung nach einem der vorhergehenden Ansprüche, gekennzeichnet durch as Vorsehen eines Schritts zum Zurückziehen der elektrode (EP) auf ein selektives Umschalten hin zwischen einer Rückzugsbetriebsweise zum Zurückziehen der Elektrode (EP) in Richtung auf den festgelegten Punkt (A) in Reaktion auf das Kurzschlußsignal (SS) und einer Rückzugsbetriebsweise zum Zurückziehen der Elektrode (EP) längs eines zuvor verfolgten Bearbeitungsweges in Reaktion auf die Erzeugung des Kurzschlußsignals (SS).

6. Verfahren zum Steuern der Rückzugsbewegung nach Anspruch 5, dadurch gekennzeichnet, daß die Rückzugsbetriebsweisen durch einen G-Funktionsbefehl umgeschaltet werden und daß der G-Funktionsbefehl eine Befehlsform ist.

**Revendications**

1. Un procédé de commande de recul dans une machine décharges électriques dans lequel une électrode (EP) est déplacée par rapport à une pièce à usiner (WK) pour soumettre la pièce à usiner (WK) à un usinage par décharges électriques, et dans lequel l'électrode (EP) est déplacée, en réponse à la production d'un signal de court-circuit (SS) inidiquant un contact entre l'électrode (EP) et la pièce à usiner (WK), dans une direction qui interrompra ledit contact, caractérisé par le fait de définir à l'advance un point fixé (A) utilisé pour le recul de l'électrode (EP), de distinguer la production d'un signal de court-circuit (SS), et de faire reculer l'électrode (EP) vers ledit point fixé (A) en réponse à la production du signal de court-circuit (SS).

2. Un procédé de commande de recul selon la revendication 1, caractérisé par la phase de mémoriser les coordonnées du point fixé (A), mémoriser une position de court-circuit (P) en réponse à la production d'un signal de court-circuit (SS), faire reculer l'électrode vers la position fixée (A), arrêter le recul en réponse à l'interruption du court-circuit, et repositionner l'électrode (EP) dans la position de court-circuit (P).

3. Un procédé de commande de recul selon la revendication 2, caractérisé par le fait de comporter une phase de lecture de la position actuelle de l'électrode (EP) par rapport à la pièce à usiner (WK), et dans lequel la position actuelle prévalant quand le signal de court-circuit (SS) est produit sert de position de court-circuit (P).

4. Un procédé de commande de recul selon la revendication 2 ou 3, caractérisé en ce que, à la suite du repositionnement de l'électrode (EP) dans la position de court-circuit (P), l'électrode est déplacée par rapport à la pièce à usiner (WK) le long d'un trajet commandé pour reprendre l'usinage par décharges électriques.

5. Un procédé de commande de recul selon l'une quelconque des revendications précédentes, caractérisé en ce qu'il comporte une phase de recul de l'électrode (EP) par commutation sélective entre un mode de recul pour reculer l'électrode (EP) vers le point fixé (A) en réponse au signal de court-circuit (SS), et un mode de recul pour reculer l'électrode (EP) le long du trajet précédemment usiné en réponse à la production du signal de court-circuit (SS).

6. Un procédé de commande de recul dans une machine à décharges électriques selon la revendication 5, caractérisé en ce que les modes de recul sont commutés par l'intermédiaire d'une instruction de fonction G, et en ce que ladite instruction de fonction G est une instruction de base.

# Fig . I

0 090 049

# Fig. 2

(a)

EP

WK

(b)

EP

WK

# Fig. 3

ARC (a) P

WK

EP

S

A

(b)

EP RTP

WK

S

A

P

# Fig. 5

P(Xa.Ya.Za)

R(Xá.Yá.Zá)

A(Xf.Yf.Zf)

S

2

Fig. 4